# EUROPEAN PATENT APPLICATION

(11) **EP 2 824 005 A1**
(43) Date of publication of application: **14.01.2015**
(21) Application number: 13755722.9
(22) Date of filing: 28.02.2013
(51) Int. Cl.: B60T 8/176, B60T 8/32

(54) **VEHICLE ANTILOCK BRAKING DEVICE AND METHOD**

(30) Priority: 02.03.2012 CN 201210052941
(71) Applicant: Bosch Automotive Products (Suzhou) Co., Ltd., Jiangsu 215021 (CN)
(72) Inventor: YU, Eric, Suzhou Jiangsu 215021 (CN); LI, Jianpeng, Suzhou Jiangsu 215021 (CN); XU, Bin, Suzhou Jiangsu 215021 (CN); FRANKE, Mirko, Suzhou Jiangsu 215021 (CN)
(74) Representative: Bee, Joachim
(86) International application number: PCT/CN2013/071993
(87) International publication number: WO 2013/127348

(57) **Abstract**

Disclosed is a vehicle antilock braking device, comprising: a mechanical braking unit (1), a wheel speed sensor (2), a microcontroller (3) and an antilock actuating unit (4), wherein the mechanical braking unit comprises a brake wire (12). Further disclosed is a vehicle antilock braking method. The method uses the microcontroller (3) to detect if the vehicle wheels have been locked up, and controls the antilock actuating unit (4) to generate an antilock pulling force on the brake wire (12) to timely reduce the braking force applied on the vehicle wheel which is in the locked condition. The device has a simple structure and is of low cost. The method is simple and practical, and can effectively prevent vehicle wheels from locking up.

## Description

### Technical Field

The invention relates to a vehicle antilock braking device and method.

### Background Art

During emergency braking of a vehicle, when the braking force is too high, wheel locking is likely to occur if the vehicle is not equipped with an antilock braking system. In this condition, the vehicle losses its steering ability, causing sideslip and tail flick of the vehicle, so that the driver cannot continue to control the vehicle, and traffic accident may happen. When driving on a wet road or an ice/snow-covered road, such an uncontrollable and unstable phenomenon occurs even more frequently.

By using an antilock device, safety and manipulability of the vehicle during braking can be increased, so the steering ability can be maintained and thus the risk of vehicle accident can be reduced. For a vehicle equipped with an antilock device, when a wheel speed sensor detects that wheel locking may occur, the antilock device can reduce the braking force, which causes locking up of the wheel, in an extreme short time to prevent wheel locking.

Nowadays, hydraulic braking systems are used in most vehicles and motorcycles, so a majority of antilock braking devices are designed for hydraulic braking systems. The structure and the operation principle of such an antilock braking device are based on sensors provided on vehicle wheels. Dynamic information of these sensors during vehicle braking is transmitted to a central processor of the vehicle, and the central processor processes the information and then controls, via a control system, the operation state of the hydraulic braking system in proper time to achieve antilock braking. Such an antilock braking system has a complex structure and a high cost, and can only be used in a vehicle having a hydraulic braking system, but is not applicable in a vehicle with a mechanical braking system.

In view of this, it is desired to design an antilock device for a mechanical braking system.

### Summary of the Invention

An object of the invention is to overcome the defects existed in the prior art by providing a vehicle antilock braking device and method for preventing wheel locking of a vehicle having a mechanical braking unit.

The above object is achieved by a vehicle antilock braking device comprising:
a mechanical braking unit configured to generate a braking force for braking a wheel of a vehicle and to send out a brake triggering signal, the mechanical braking unit comprising a brake triggering component, a brake wire and a brake unit;
a wheel speed sensor mounted to the vehicle for sensing a wheel speed;
a microcontroller electrically connected with the wheel speed sensor and the braking unit and configured to check whether there is a wheel locked condition based on a wheel speed sensor signal and the brake triggering signal from the braking unit and to send out an antilocking control signal; and
an antilock actuating unit electrically connected with the microcontroller and configured to be in responsive to the antilocking control signal from the microcontroller to generate an antilock pulling force for pulling the brake wire to reduce the braking force acted on the wheel which is in the wheel locked condition.

The invention also provides a vehicle antilock braking method for reducing or eliminating the braking force of a braking unit of a vehicle, the method comprising:
acquiring a wheel speed sensor signal and a brake triggering signal;
determining a vehicle braking state when the brake triggering signal is obtained;
calculating a deceleration of a vehicle wheel and a vehicle body speed based on the wheel speed sensor signal;
calculating a wheel slippage;
determining whether there is a wheel locked condition by comparing the deceleration of the vehicle wheel with a wheel deceleration threshold and comparing the wheel slippage with a wheel slippage threshold;
sending out an antilocking control signal when the wheel locked condition is determined; and
generating a pulling force for pulling the braking unit to reduce or eliminate the braking force of the braking unit.

According to the invention, a microcontroller is used for sensing the wheel locked condition and for controlling the generation of a mechanical pulling force for pulling the brake wire to reduce the braking force acted on a vehicle wheel which is in a wheel locked condition timely, so that the wheel locked condition can be eliminated effectively. The device of the invention has a simple structure and a low cost, and is applicable in antilocking of mechanical braking systems.

### Brief Description of the Drawings

The above and other aspects of the invention will be more completely understood and comprehended by reading the following detailed description with reference to the drawings in which:
Figure 1 is a schematic structural view of a vehicle antilock braking device of the invention;
Figure 2 is a view showing the operation principle of a wheel speed sensor of the vehicle antilock braking device of the invention;
Figure 3 is another schematic structural view of the vehicle antilock braking device of the invention, showing transmitting of signals;
Figure 4 is a schematic view showing operation modules of a the microcontroller of the vehicle antilock braking device of the invention;
Figure 5 is a schematic structural view of an antilock actuating unit according to an embodiment of the vehicle antilock braking device of the invention;
Figure 6 is a schematic structural view showing the connection relationship between the antilock actuating unit and a brake wire according to an embodiment of the vehicle antilock braking device of the invention; and
Figure 7 is a flowchart of a vehicle antilock braking method of the invention.

### Detailed Description of Preferred Embodiments

Now the invention will be described in further details with reference to the drawings and some embodiments.

The vehicle antilock braking device of the invention comprises a braking unit 1, a wheel speed sensor 2, a microcontroller 3 and an antilock actuating unit 4.

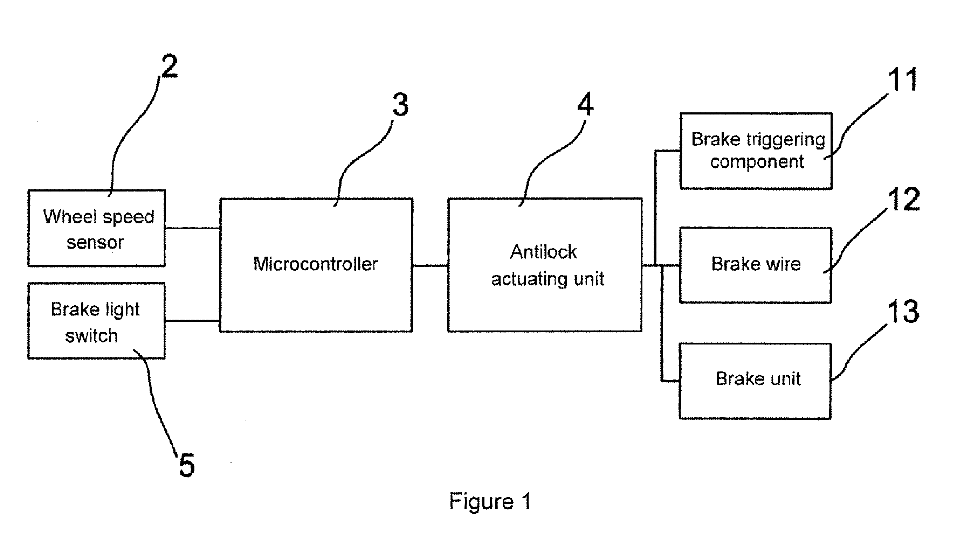

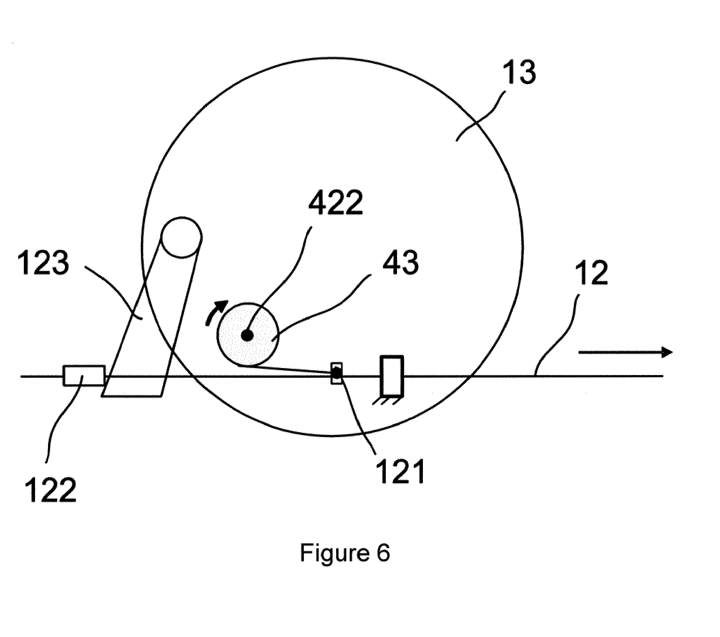

With reference to Figure 1 and Figure 6 in combination, the braking unit 1 may be a braking unit embodied in a mechanical manner, such as a drum brake, a wire brake or the like. In the illustrated embodiment, the braking unit 1 mainly comprises a brake triggering component 11, a brake wire 12, a brake unit 13 and a brake light switch 5. The brake triggering component 11 may be in the form of a brake handle bar, a brake button, a brake pedal or the like. The brake unit 13 is a brake drum 13. The brake wire 12 has one end connected with the brake triggering component 11 and another end connected with brake drum 13 via a pulling bar 123. The brake wire 12 is provided with an adjusting screw 122 for adjusting the tightness of the brake wire 12. The pulling bar 123 is provided between the brake wire 12 and brake drum 13 for transmitting a force from the brake triggering component 11 to the brake drum 13. During vehicle braking, the driver may apply a force to push down the brake triggering component 11, and the force on the brake triggering component 11 is transmitted to the brake drum 13 to cause a brake shoe (not shown) to come into frictionally contact with the brake drum 13 to block the rotation of the vehicle wheel, so that vehicle braking is effected.

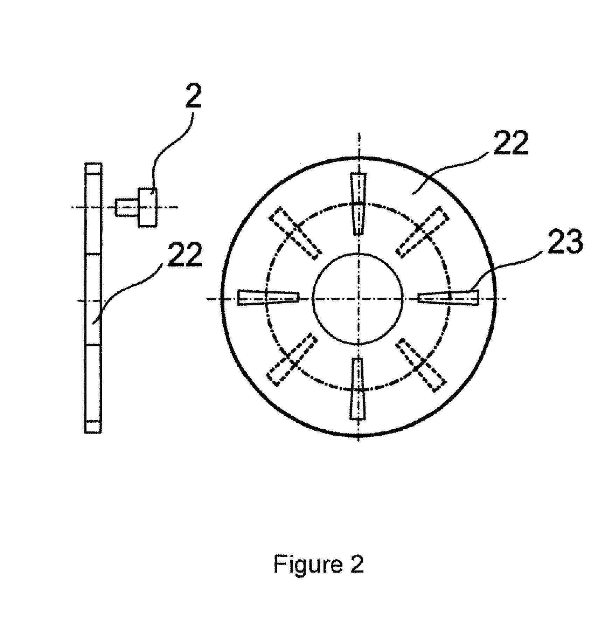

With reference to Figure 2, front and back vehicle wheels of the vehicle are each mounted with a wheel speed sensor 2 for sensing a front or back wheel speed. The wheel speed sensor 2 may be a speed sensor of any type, such as an electro-magnetic sensor, a photo-electro sensor or the like. In the present embodiment, the wheel speed sensor 2 is a Hall sensor. When teeth 23 of a tooth ring 22 of the vehicle pass the wheel speed sensor 2, the wheel speed sensor 2 sends out a wheel speed sensor signal, such as a rectangular pulse wave.

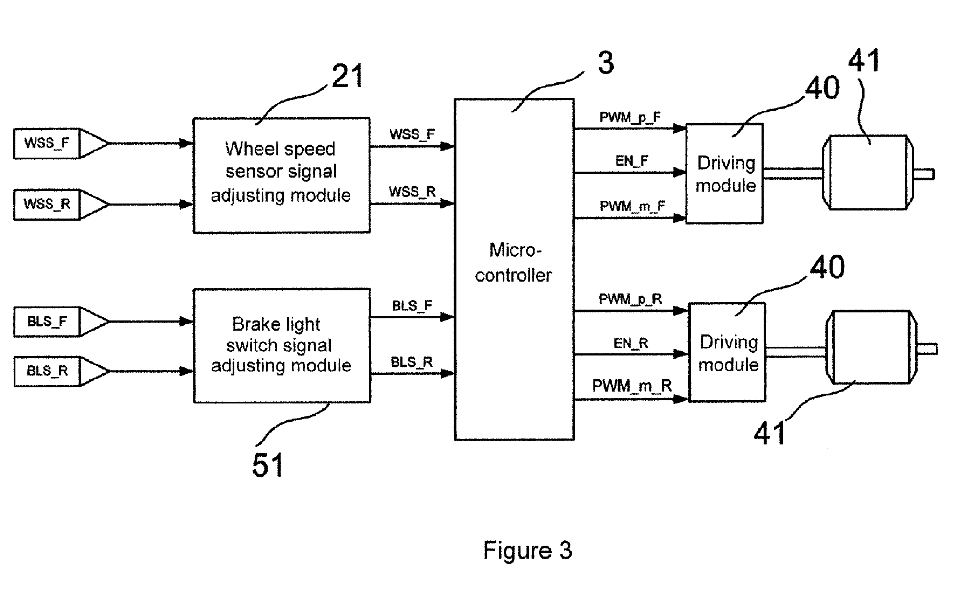

With reference to Figure 3, the microcontroller 3 comprises an input end electrically connected with the wheel speed sensors 2 and the brake light switch 5 and receiving input signals including a front wheel speed sensor signal "WSS_F", a back wheel speed sensor signal "WSS_R" and brake light switch signals "BLS_F" and "BLS_R" of the front and back wheels. Based on the wheel speed sensor signals "WSS_F" and "WSS_R" and the brake light switch signals "BLS_F" and "BLS_R", the microcontroller 3 judges whether a wheel locked condition occurs (including the case that a potential wheel locked condition will occur and the case that a wheel locked condition has already occurred) and sends out an antilocking control signal. In the present embodiment, the input signals are suitably adjusted in a wheel speed sensor signal adjusting module 21 and a brake light switch signal adjusting module 51 respectively, and are then input into the microcontroller 3.

In the present embodiment, the microcontroller 3 is electrically connected with the brake light switch 5 and receives brake triggering signals, including the brake light switch signals "BLS_F" and "BLS_R", for sensing whether vehicle braking is conducted. The microcontroller 3 may further be connected with other components of the braking unit 1, such as the brake triggering component 11 or the brake wire 12, so that the brake triggering signal may be sent out from the brake triggering component 11 for determining the occurrence of vehicle braking.

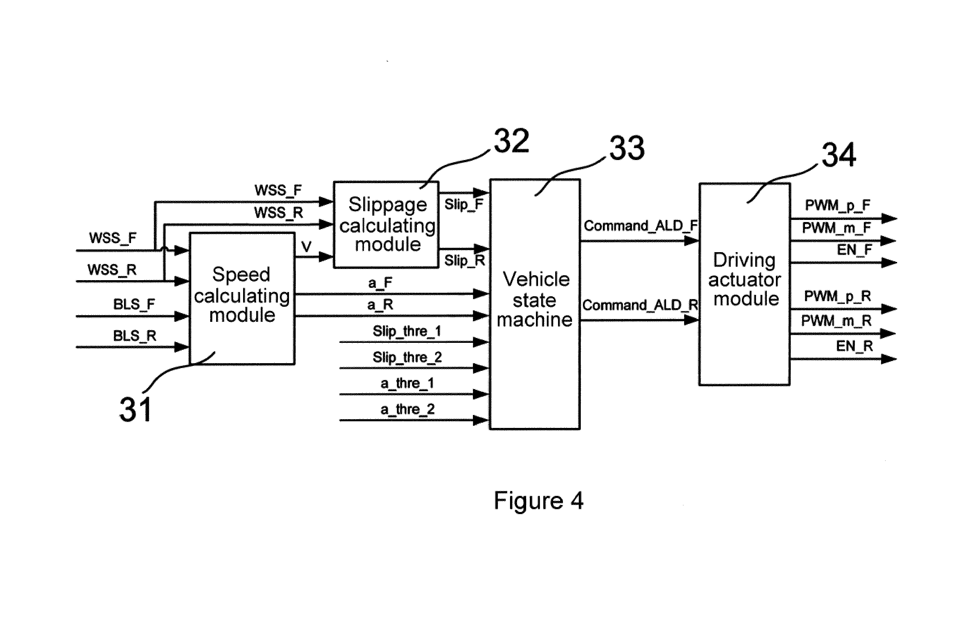

With reference to Figure 4, the microcontroller 3 comprises a speed calculating module 31, a slippage calculating module 32, a vehicle state machine 33 and a driving actuator module 34.

The speed calculating module 31 comprises an input end electrically connected with the wheel speed sensor 2 and the brake light switch 5, and an output end electrically connected with the slippage calculating module 32 and the vehicle state machine 33 respectively. On the basis of the wheel speed sensor signals "WSS_F" and "WSS_R" and the brake light switch signals "BLS_F" and "BLS_R", the speed calculating module 31 calculates and outputs front and back wheel decelerations "a_F" and "a_R" and a vehicle body speed "V".

The slippage calculating module 32 comprises an input end electrically connected with the wheel speed sensor 2 and the speed calculating module 31, and an output end electrically connected with the vehicle state machine 33. Based on the wheel speed sensor signals "WSS_F" and "WSS_R" and the vehicle body speed "V", the slippage calculating module 32 calculates and outputs front and back wheel slippages "Slip_F" and "Slip_R". In another embodiment, the slippage calculating module 32 may directly calculate and output front and back wheel slippages "Slip_F" and "Slip_R" based on the front and back wheel decelerations "a_F" and "a_R" and the vehicle body speed "V".

The vehicle state machine 33 comprises an input end electrically connected with the slippage calculating module 32 and the speed calculating module 31. The vehicle state machine 33 stores therein predetermined thresholds, including front and back wheel slippage thresholds "slip_thre_1" and "slip_thre_2" and front and back wheel deceleration thresholds "a_thre_1" and "a_thre_2", wherein "a_thre_1" < "a_thre_2". In the present embodiment, "a_thre_1" is a negative value, and "a_thre_2" is a positive value. Further, "slip_thre_1" < "slip_thre_2". In the present embodiment, "slip_thre_1" and "slip_thre_2" are both negative values. The values of the front and back wheel slippage thresholds "slip_thre_1" and "slip_thre_2" and the front and back wheel deceleration thresholds "a_thre_1" and "a_thre_2" can be set based on real need. The wheel slippages "Slip_F" and "Slip_R" and the front and back wheel decelerations "a_F" and "a_R" as input data are compared with the above mentioned predetermined thresholds respectively for judging whether a wheel locked condition presents. The term "wheel locked condition" used here means both a potential wheel locked condition that is to be occurred or a wheel locked condition that has been occurred. When a locked condition of the front wheel and/or the back wheel is detected, an antilock command signal "Command_ALD" is output for applying a pulling force for pulling the brake wire to reduce or eliminate the braking force. When it is detected that the wheel locked condition has been eliminated, a locking release signal is output for reducing or even removing the pulling force applied to the brake wire.

The driving actuator module 34 converts the received antilock command signal into the antilocking control signal "Command_ALD" and thus controls the antilock actuating unit 4 associated with the wheel which is in the locked condition.

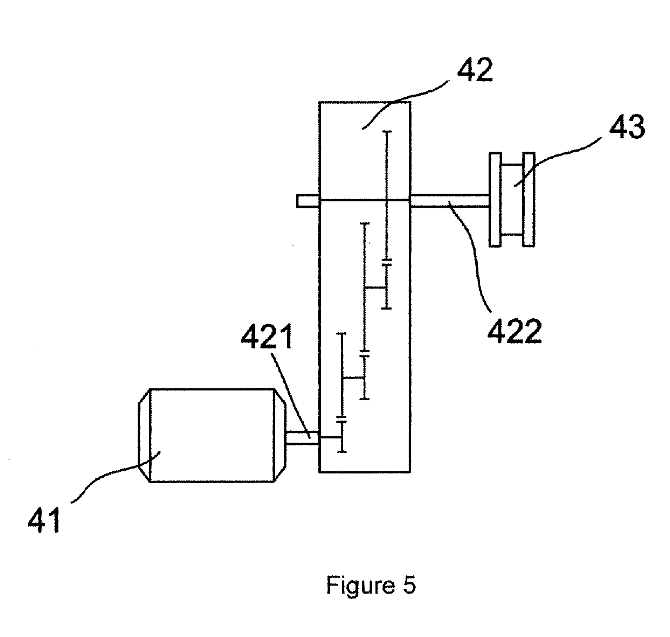

With reference to Figure 3 and Figure 5 in combination, in responsive to the antilocking control signal from the microcontroller 3, the antilock actuating unit 4 generates a pulling force on the brake wire 12 for pulling it, to timely reduce or remove the braking force on the wheel which is in the locked condition. In the present embodiment, the antilock actuating unit 4 comprises an electric motor 41, a transmission box 42 and a rotation shaft 43.

In the present embodiment, the electric motor 41 is connected with the microcontroller 3 via a driving module 40, the driving module 40 mainly comprising an H-bridge circuit for driving the electric motor 41 to rotate in either one of forward and backward directions based on a command. Once the driving module 40 receives the antilocking control signals "PWM_p" and "PWM_m" and "EN" from the microcontroller 3, it drives the electric motor 41 to rotate in the counter-clockwise direction at high rotational speed/low torque. In the present embodiment, the driving module 40 is a separate module. In another embodiment, the driving module 40 may be integrated into the microcontroller 3 or be provided in the electric motor 41, depending on real practice.

The transmission box 42 comprises an input end 421 coupled to the electric motor 41, and an output end 422 coupled to the rotation shaft 43, and is configured to convert the counter-clockwise rotation at high rotational speed/low torque of the electric motor 41 to a rotation at low rotational speed/high torque which is to be transmitted to the rotation shaft 43 to drive the rotation shaft 43 to rotate in the clockwise direction at low rotational speed/high torque. In the present embodiment, the transmission box 42 comprises a set of 3-stage gears. The rotation directions of the electric motor 41 and the rotation shaft 43 are only illustrative. It is appreciated that, in another embodiment, the transmission box 42 may comprise other types of transmission devices, and the electric motor 41 and the rotation shaft 43 may rotate in any directions respectively, only if the pulling force to be applied to the brake wire 12 for reducing or removing the braking force on the wheel which is in the locked condition can be generated effectively.

With reference to Figure 6, In the present embodiment, the brake wire 12 is provided with a connecting member 121, the connecting member 121 comprising one end fixed to the brake wire 12 and another end fixed to the rotation shaft 43 to couple the rotation shaft 43 with the brake wire 12. In the condition that the brake wire 12 generates a pulling force directed to the right in this figure which results in locking up of the wheel, the rotation shaft 43 rotates in the clockwise direction with a high torque which generates a pulling force for pulling the brake wire 12 to reduce or eliminate the contact frictional force between the brake shoe and the brake drum 13, as a result of which, the braking force of the braking unit, which acts on the wheel which is in the locked condition, is reduced or eliminated.

In the present embodiment, the antilock actuating unit 4 is implemented by the electric motor 41, the transmission box 42 and the rotation shaft 43. It is appreciated that, under the teach of the present embodiment, a skilled in the art can conceive other mechanical means for forming the antilock actuating unit 4, such as those formed by an electric motor, a pump or a hydraulic cylinder individually or in combination, or formed only by a mechanical flywheel, a cam mechanism or the like, only if the pulling force to be applied to the brake wire 12 for reducing or removing the braking force on the wheel which is in the locked condition can be generated effectively. The principle for forming the antilock actuating unit 4 by other means is the same as or similar to that described in the present embodiment and is not described again.

In the present embodiment, the front and back wheels are each provided with a vehicle antilock braking device of the invention for preventing the front and back wheels from being locked up. It is appreciated that the vehicle antilock braking device of the invention may also be applied to wheels provided at other locations for achieving the antilocking function. For example, in another embodiment, depending on real need, the vehicle antilock braking device of the invention may be provided for only an intermediate wheel disposed between the front and back wheels or provided for only the back wheel; alternatively, the front and back wheels may share a common vehicle antilock braking device of the invention.

The vehicle antilock braking device of the invention is applicable in any vehicle equipped with a mechanical brake device, such as an automotive vehicle having four or more wheels, an electric tricycle, an ebike, a pedal tricycle, a bicycle and the like. For an automotive vehicle having four or more wheels, an electric tricycle or an ebike, the hardware and software of the microcontroller 3 of the vehicle antilock braking device of the invention may be provided separately or be integrated into an existing electronic control unit of the vehicle.

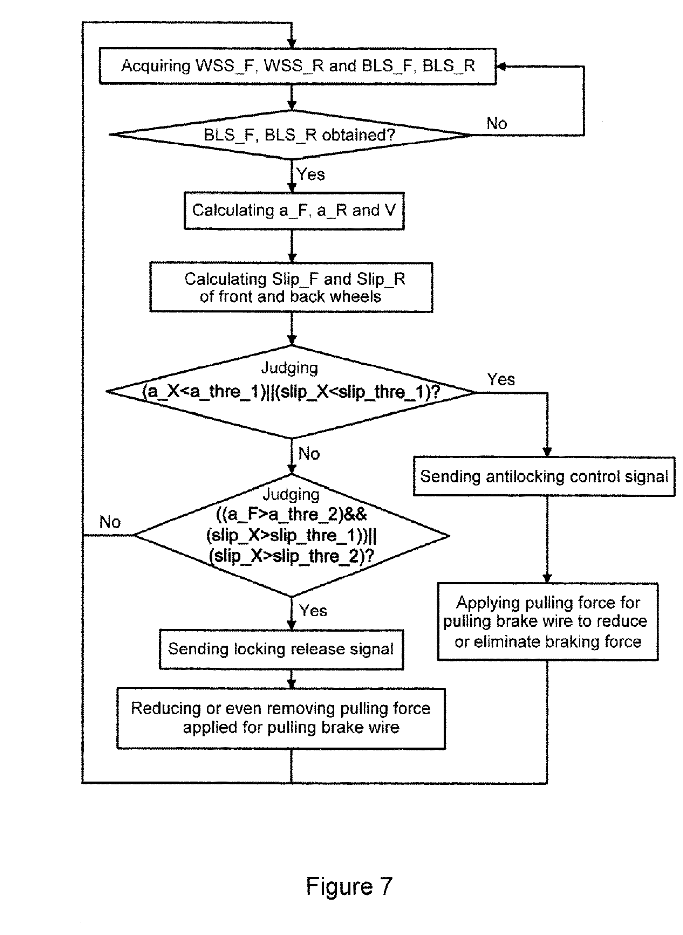

With reference to Figure 7, the operation method of the vehicle antilock braking device of the invention is described below:
first, the microcontroller acquiring the wheel speed sensor signals "WSS_F" and "WSS_R" and the brake triggering signal. In the present embodiment, the brake triggering signal comprises the brake light switch signals "BLS_F" and "BLS_R";
then, determining a vehicle braking state when the brake light switch signals "BLS_F" and "BLS_R" are obtained;
then, calculating the front and back wheel decelerations "a_F" and "a_R" and the vehicle body speed "V" based on the wheel speed sensor signals "WSS_F" and "WSS_R";
then, calculating the front and back wheel slippages "Slip_F" and "Slip_R" based on the front and back wheel decelerations "a_F" and "a_R" and the vehicle body speed "V"; and
then, determining whether there is a wheel locked condition by comparing the deceleration "a_X" of any one of the wheels (i.e., any one of the front and back wheel decelerations "a_F" and "a_R") with the deceleration thresholds "a_thre_1" and "a_thre_2" and by comparing the slippage "Slip_X" of any one of the wheels (i.e., any one of "Slip_F" and "Slip_R") with the wheel slippage thresholds "slip_thre_1" and "slip_thre_2", wherein "a_thre_1" < "a_thre_2", and "slip_thre_1" < "slip_thre_2". For example, in the condition that the deceleration "a_X" of any one of the wheels is lower than the deceleration threshold "a_thre_1", or the slippage "Slip_X" of any one of the wheels is lower than wheel slippage threshold "slip_thre_1", it is determined that the wheel is in a locked condition. Then, the antilocking control signals "PWM_p" and "PWM_m" and "EN" are sent out for generating the pulling force to be applied to the brake wire for reducing or removing the braking force. On the other hand, in the condition that the deceleration "a_X" of any one of the wheels is higher than the deceleration threshold "a_thre_2" and the slippage "Slip_X" of any one of the wheels is higher than wheel slippage threshold "slip_thre_1", or in the condition that the slippage "Slip_X" of any one of the wheels is higher than wheel slippage threshold "slip_thre_2", the locking release signal is sent out for reducing or even removing the pulling force applied for pulling the brake wire.

According to the invention, a microcontroller is used which functions in an electronically controlled manner for sensing the wheel locked condition and for controlling the generation of a mechanical pulling force for pulling the brake wire to reduce the braking force acted on a vehicle wheel which is in a wheel locked condition timely, so that the wheel locked condition is eliminated effectively. The device of the invention has a simple structure and a low cost, and is applicable in antilocking of mechanical braking systems.

While the invention has been shown and described on the basis of certain embodiments, the invention is intended to be limited the illustrated details; rather, various features of the invention can be implemented within the scope of the attached claims and their equivalents.

## Claims

1. A vehicle antilock braking device, comprising a mechanical braking unit configured to generate a braking force for braking a wheel of a vehicle and to send out a brake triggering signal, the mechanical braking unit comprising a brake triggering component, a brake wire and a brake unit, **characterized in that** the vehicle antilock braking device further comprises:
a wheel speed sensor mounted to the vehicle for sensing a wheel speed;
a microcontroller electrically connected with the wheel speed sensor and the braking unit and configured to check whether there is a wheel locked condition based on a wheel speed sensor signal and the brake triggering signal from the braking unit and to send out an antilocking control signal; and
an antilock actuating unit electrically connected with the microcontroller and configured to be in responsive to the antilocking control signal from the microcontroller to generate an antilock pulling force for pulling the brake wire to reduce the braking force acted on the wheel which is in the wheel locked condition.

2. The vehicle antilock braking device according to claim 1, **characterized in that** the wheel speed sensor comprises a Hall sensor.

3. The vehicle antilock braking device according to any one of preceding claims, **characterized in that** the braking unit further comprises a brake light switch, the brake triggering signal being sent out from the brake light switch, to be used for checking whether the vehicle is in the braking state.

4. The vehicle antilock braking device according to any one of preceding claims, **characterized in that** the antilock actuating unit comprises an electric motor, a transmission box and a rotation shaft, for generating the antilock pulling force for pulling the brake wire in responsive to the antilocking control signal from the microcontroller.

5. The vehicle antilock braking device according to any one of preceding claims, **characterized in that** the electric motor is connected with the microcontroller, for outputting a rotation at high rotational speed/low torque in responsive to the antilocking control signal.

6. The vehicle antilock braking device according to any one of preceding claims, **characterized in that** the electric motor is connected with the microcontroller via a driving module, the driving module comprising an H-bridge circuit for driving the electric motor to rotate in a forward or backward direction in responsive to the command of the microcontroller.

7. The vehicle antilock braking device according to any one of preceding claims, **characterized in that** the transmission box comprises an input end coupled to the electric motor and an output end coupled to the rotation shaft, and the transmission box is configured to convert the rotation at high rotational speed/low torque of the electric motor to a rotation at low rotational speed/high torque which is to be transmitted to the rotation shaft to drive the rotation shaft to rotate at low rotational speed/high torque to pull the brake wire.

8. The vehicle antilock braking device according to any one of preceding claims, **characterized in that** the brake wire is provided with a connecting member which comprises one end fixed to the brake wire and another end connected with the rotation shaft so that the rotation shaft pulls the brake wire when it rotates at low rotational speed/high torque.

9. The vehicle antilock braking device according to any one of preceding claims, **characterized in that** the microcontroller comprises a speed calculating module electrically connected with the wheel speed sensor and the braking unit and configured to calculate decelerations of the wheels and a vehicle body speed on the basis of the wheel speed sensor signal and the brake triggering signal.

10. The vehicle antilock braking device according to any one of preceding claims, **characterized in that** the microcontroller comprises a slippage calculating module electrically connected with the speed calculating module for calculating slippages of the wheels.

11. The vehicle antilock braking device according to any one of preceding claims, **characterized in that** the microcontroller comprises a vehicle state machine which is electrically connected with the slippage calculating module and in which predetermined thresholds for wheel slippages and wheel decelerations are stored, the vehicle state machine comparing the wheel slippages and the wheel decelerations with corresponding thresholds to determine whether a wheel locked condition exists and to output an antilock command signal or a locking release signal.

12. The vehicle antilock braking device according to any one of preceding claims, **characterized in that** the microcontroller comprises an actuating control module for converting the antilock command signal to a control signal for the electric motor to drive the electric motor of the antilock actuating unit to rotate.

13. The vehicle antilock braking device according to any one of preceding claims, **characterized in that** the microcontroller may either be integrated into an existing electronic control unit of the vehicle or be provided individually.

14. The vehicle antilock braking device according to any one of preceding claims, **characterized in that** the vehicle is an automotive vehicle having four or more wheels, an electric tricycle, an ebike, a pedal tricycle, or a bicycle.

15. The vehicle antilock braking device according to any one of preceding claims, **characterized in that** the antilock actuating unit is either formed by an electric motor, a pump or a hydraulic cylinder individually or in combination, or formed only by a mechanical flywheel or a cam mechanism.

16. A vehicle antilock braking method for reducing or eliminating the braking force of a braking unit of a vehicle, the method comprising:
acquiring a wheel speed sensor signal and a brake triggering signal;
determining a vehicle braking state when the brake triggering signal is obtained;
calculating a deceleration of a vehicle wheel and a vehicle body speed based on the wheel speed sensor signal;
calculating a wheel slippage;
determining whether there is a wheel locked condition by comparing the deceleration of the vehicle wheel with wheel deceleration thresholds "a_thre_1" and "a_thre_2" and comparing the wheel slippage with wheel slippage thresholds "slip_thre_1" and "slip_thre_2";
sending out an antilocking control signal when the wheel locked condition is determined; and
generating a pulling force for pulling the braking unit to reduce or eliminate the braking force of the braking unit.

17. The vehicle antilock braking method according to the preceding claim, **characterized in that**, in the step for generating a pulling force for pulling the braking unit, a force corresponding to a low torque is generated first, and then the force corresponding to a low torque is converted to a force corresponding to a high torque, the pulling force being the force corresponding to a high torque.

18. The vehicle antilock braking method according to any one of the preceding claims, **characterized in that** a wheel locked condition is determined when the deceleration of any one of the wheels is lower than the deceleration threshold "a_thre_1" or the slippage of any one of the wheels is lower than the wheel slippage threshold "slip_thre_1", and then the antilocking control signal is send out.

19. The vehicle antilock braking method according to any one of the preceding claims, **characterized in that** the locking release signal is send out when the deceleration of any one of the wheels is higher than the deceleration threshold "a_thre_2" and the slippage of any one of the wheels is higher than the wheel slippage threshold "slip_thre_1", or when the slippage of any one of the wheels is higher than wheel slippage threshold "slip_thre_2", wherein "a_thre_1" < "a_thre_2", and "slip_thre_1" < "slip_thre_2".
